(19)

**Europäisches Patentamt**
**European Patent Office**
**Office européen des brevets**

(11) **EP 2 811 258 B1**

(12) **EUROPEAN PATENT SPECIFICATION**

(45) Date of publication and mention
of the grant of the patent:
**17.02.2016 Bulletin 2016/07**

(51) Int Cl.:
*G01B 11/26* *(2006.01)*   *G01C 1/00* *(2006.01)*
*G06N 99/00* *(2010.01)*   *G01D 5/34* *(2006.01)*

(21) Application number: **14425066.9**

(22) Date of filing: **30.05.2014**

(54) **Ultra-sensitive photonic tiltmeter utilizing the orbital angular momentum of the light, and relevant angular measurement method**

Hochempfindlicher, photonischer Neigungssensor, der das orbitale Drehmoment des Lichts ausnutzt, sowie darauf basierendes Winkelmessverfahren

Capteur d'inclination photonique ultrasensible utilisant le couple de rotation orbitale de la lumière, et méthode de mesure angulaire respective

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2013 IT RM20130318**

(43) Date of publication of application:
**10.12.2014 Bulletin 2014/50**

(73) Proprietors:
 • **Universita' Degli Studi di Roma "La Sapienza"**
   **00185 Roma (RM) (IT)**
 • **Universita' degli Studi di Napoli "Federico II"**
   **80138 Napoli (IT)**
 • **ICFO - Institut de Ciencies Fotoniques**
   **08860 Barcelona (ES)**
 • **Universidade Federal Do Rio De Janeiro**
   **CEP 21941-901 Rio de Janeiro RJ (BR)**
 • **National University of Singapore**
   **Singapore 119077 (SG)**

(72) Inventors:
 • **D'Ambrosio, Vincenzo**
   **00185 Roma, RM (IT)**
 • **Spagnolo, Nicolò**
   **00185 Roma, RM (IT)**
 • **Del Re, Lorenzo**
   **00144 Rome (IT)**
 • **Marrucci, Lorenzo**
   **Napoli - NA (IT)**
 • **Slussarenko, Sergei**
   **Napoli - NA (IT)**
 • **Aolita, Mario Leando**
   **08860 Barcelona (ES)**
 • **Walbron, Stephen Patrick**
   **21941-901 Rio de Janeiro - RJ (BR)**
 • **Kwek, Leong Chuan**
   **119077 (SG)**
 • **Li, Ying**
   **119077 (SG)**
 • **Sciarrino, Fabio**
   **00185 Roma, RM (IT)**

(74) Representative: **Perronace, Andrea et al**
**Barzano & Zanardo Roma S.p.A.**
**Via Piemonte 26**
**00187 Roma (IT)**

(56) References cited:
**US-A- 6 049 377**

 • **HONG JIANG ET AL: "Sensitivity enhanced roll angle measurement", OPTICAL ENGINEERING, vol. 39, no. 2, 1 February 2000 (2000-02-01), page 516, XP055100732, ISSN: 0091-3286, DOI: 10.1117/1.602390**
 • **ALISON M. YAO ET AL: "Orbital angular momentum: origins, behavior and applications", ADVANCES IN OPTICS AND PHOTONICS, vol. 3, no. 2, 30 June 2011 (2011-06-30), page 161, XP055100728, ISSN: 1943-8206, DOI: 10.1364/AOP.3.000161**

- **LORENZO MARRUCCI ET AL: "REVIEW ARTICLE;Spin-to-orbital conversion of the angular momentum of light and its classical and quantum applications;Spin-to-orbital conversion of the angular momentum of light and its classical and quantum applications", JOURNAL OF OPTICS, INSTITUTE OF PHYSICS PUBLISHING, BRISTOL GB, vol. 13, no. 6, 27 April 2011 (2011-04-27) , page 64001, XP020206203, ISSN: 2040-8986, DOI: 10.1088/2040-8978/13/6/064001**

## Description

The present invention concerns an ultra-sensitive photonic tiltmeter or goniometer utilizing a novel optical effect named "photonic polarization gear effect", based on the orbital angular momentum of the light, to measure with high resolution and sensitivity the roll angle of a rotating object relative to a fixed measurement stage, or to perform related angular measurements.

More in detail, the present invention concerns an optical system that uses a pair of photonic devices named q-plates in combination with suitable polarization optics to greatly enhance the measurement sensitivity and resolution of angular measurements based on the polarization of light. Our invention can be combined with all existing methods for the measurement of roll angles based on the polarization of light and results in an enhancement of the corresponding angular resolution and sensitivity.

### Prior art

### Introduction

The precise estimation of a physical quantity is a relevant problem in many research areas. Classical estimation theory asserts that by repeating an experiment $N$ times, the precision of a measurement, defined by the inverse statistical error of its outcome, can be increased at most by a factor of $\sqrt{N}$. In quantum physics, this scaling is known as the standard quantum or shot-noise limit, and it holds for all measurement procedures that do not exploit quantum effects such as entanglement. Remarkably, using certain N-particle entangled states it could be possible to attain a precision that scales as $N$. This is known as the Heisenberg limit, and is the ultimate bound set by the laws of quantum mechanics [V. Giovannetti et al., Nature Photon. 5, 222 (2011)]. Proof-of-principle demonstrations of these quantum-metrology concepts have been given in recent experiments of optical-phase estimation, magnetic field sensing and frequency spectroscopy [M. W. Mitchell et al., Nature 429, 161 (2004); P. Walther et al., Nature 429, 158 (2004); T. Nagata et al., Science 316, 726 (2007); I. Afek et al., Science 316, 726 (2010); N. Spagnolo et al., Phys. Rev. Lett. 108, 233602 (2012); D. Leibfried et al., Nature 438, 639 (2005); C. Roos et al., Nature 443, 316 (2006); J. A. Jones et al., Science 24, 1166 (2009)].

Within this context, the high resolution measurement of a roll angle presents different applications, such as the correction of the Abbe error in the measurement of spatial coordinates. High resolution optical techniques [H. Jiang and C. Yin, Opt. Eng. 39, 516 (2000), Z. Liu, et al., Sensors Actuat. A 104, 127-131 (2003), S. Li, et al., Opt. Lett. 30, 242-244 (2005)] exploit the polarization degree of freedom of light to measure an angle difference θ between two observers A and B. More specifically, by sending from stage A to stage B a well defined polarization state, the angle difference between the two observers corresponds to a physical rotation of the polarization state. In such a way, it is possible to retrieve the rotation $\theta$ by performing an indirect polarization measurement of the received state by observer B.

### The orbital angular momentum of light

The propagation of light is determined by Maxwell equations, which show how a beam of light carries energy and momentum, both in the linear and angular components. In particular the angular momentum of light, related to the concept of rotation in quantum mechanics, has been always related to its polarization property. An optical beam traveling in the positive direction of the z axis that is circularly polarized, carries a z-component angular momentum content $\sigma = \pm\hbar$ per photon, which is positive if the circular polarization is left-handed and negative if it is right-handed. At the same time, a second contribution related to the transverse component of the wavefront profile can be identified. This is called orbital angular momentum, and it appears when the wavefront acquires a helical structure, or equivalently, its field spatial dependence contains a helical phase factor having the form $e^{\tau m\varphi}$, where $\varphi$ is the azimuthal phase of the position vector r around the beam axis $z$ and $m$ is any integer, positive or negative, providing the direction and the "velocity" of the phase spiraling along the beam direction. In this case the optical beam carries an angular momentum along its axis z equal to $m\hbar$. per photon, in addition to the polarization one $\sigma$.

The orbital angular momentum of light, while being already known since the early forties, has become the subject of an intense research effort since the seminal paper by Allen *et al.* in 1992 [Allen, et al., Phys. Rev. A. 45, 8185 (1992)]. Furthermore, its first observation in the quantum domain has been obtained by Mair *et al.* in 2001 [Mair et al., Nature 412, 313 (2001)], where it has been observed for the first time that a single photon, the quantum of light, carries orbital angular, meaning that information can be encoded also in the spatial properties of a single photon. For this reason, the orbital angular momentum is considered to be a recently discovered degree of freedom of the electromagnetic field. Several applications have been recently identified. For instance, the orbital angular momentum of light can be exchanged with matter, and can find application in different context such as quantum physics or biology. The orbital angular momentum couples mainly with material inhomogeneities characterized by a rotational asymmetry around the beam axis. This coupling becomes an useful property when this degree of freedom is adopted as a tool to probe the properties of a given medium [Molina-Terriza et al., J. Europ. Opt. Soc. Rap. Public. 2, 07014 (2007), Torner et al., Optics Express 13, 873 (2005)]. Other applications can be found in the context of sub-Rayleigh microscopic imaging [Tamburini et al., Phys. Rev. Lett. 97, 163903 (2006)], far-field microscopy with resolution in principle unlimited [Harke et al., Microscopy 3, 793-796 (2006), Hell, Single Molecule Spectroscopy in Chemistry, Physics and Biology pp. 365-398 (2009)], as a tool to perform accurate and rapid biological imaging of specific molecules or biological tissues for diagnostic purposes [Shoham et al., Nature Methods 2, 837 (2005)]. Furthermore, the characteristic profile of the intensity pattern of a Laguerre-Gaussian mode permits an efficient ion and atom trapping, thus being suitable for applications in atom optics and for the realization of Bose-Einstein condensates [Andersen et al., Phys. Rev. Lett. 97, 170406 (2006)].

Beyond all these applications, orbital angular momentum in particular represents a powerful tool in the context of quantum photonics, with particular attention to quantum information protocols implemented through quantum optics techniques. Quantum information (QI) is a recent research field that aims at exploiting the laws of quantum mechanics to improve the efficiency of information, computation and communication protocols beyond a classical approach. The development of this new field has opened several prospects from both a fundamental point of view, such as the capability of coherently controlling a quantum system, as well as in technological applications, such as in optical communications. The first successful implementations of quantum information protocols relied on two-level systems dubbed as qubits (quantum-bits), such as for instance the degree of freedom of the polarization of photons. In order to increase the information content of the protocols, it is necessary to increase the dimensionality of the physical system used to encode and manipulate information. Such d-level quantum systems, or qudits, provide a natural extension of qubits that has been shown to be suitable for prospective applications such as quantum cryptography and computation [Cerf et al., Phys. Rev. Lett. 88, 127902 (2002), Lanyon et al., Nature Physics 7, 134 (2009)]. The orbital angular momentum represents a natural choice in this context, since this degree of freedom is defined in an infinitely dimensional space [Franke-Arnold et al., Laser and Photonics Reviews 2, 299 (2008), Molina-Terriza et al., Nature Physics 3, 305 (2007)]. This can lead to practical advantages, allowing to increase the information content per photon and reducing the effect of noise and losses arising to imperfect experimental implementation.

## The q-plate - a tool for the manipulation of orbital angular momentum

The experimental investigation of orbital angular momentum started in the '90s. While many devices have been developed for the efficient manipulation of polarization states through birefringent media, as waveplates and polarizing beam splitter, the optical tools for generating and controlling the OAM ("Orbital Angular Momentum") photon states are rather limited. In last years many efforts have been made in order to implement a device able to generate and manipulate LG (Laguerre-Gauss) modes with high efficiency. Different devices have been developed for this purpose. Computer generated holograms, that is, diffraction gratings impressed on a film depending on a specific computer-calculated interference pattern, can be exploited to generate a given input state and to analyze a specific OAM component of the analyzed beam, with efficiency lower than 30%. Spiral phase plates [Beijersbergen et al., Opt. Commun. 112, 321 (1994)], composed of a transparent medium whose thickness varies with the azimuthal angle $\varphi$, can be exploited to directly introduce a phase shift on the incident light which varies with $\varphi$, thus inducing a helical structure in the output phase front. Recently spatial light modulators (SLM), devices based on liquid crystals that are able to modulate both the intensity and the phase simultaneously [N. Yoshida et al., Proc. SPIE 2885, 132 (1996)], have been adopted to manipulate the orbital angular momentum of light. They present the advantage of the possibility of producing dynamical holograms, while efficiencies are typically in the range 10%-50%. Among the different currently adopted tools, Marrucci et al. [L. Marrucci et al., Phys. Rev. Lett. 96, 163905 (2006)] developed a device that enables the coupling between the spinorial and the orbital components of the angular momentum of light.

When a light beam interacts with matter, a transfer of angular momentum $\vec{J}$ can take place, obeying to the conservation of the global angular momentum of the system. In particular a photon absorbed by a medium can transfer only the spinorial component of angular momentum in anisotropic media, while the orbital component can be transferred in inhomogeneous isotropic transparent media [Beijersbergen et al., Opt. Commun. 96, 123-132 (1993); Beijersbergen et al., Opt. Commun. 112, 321 (1994); R. A. Beth, Phys. Rev. 50, 115 (1936)]. A simultaneous exchange of both spinorial and orbital component of angular momentum is then expected to take place in a medium which is at the same time anisotropic and inhomogeneous, such as liquid crystals (LC). Their structure is determined by the director axis, along witch all the molecules tend to be oriented. By applying electric or magnetic field, or by varying the temperature, it is possible to change the properties of the LC. A q-plate (QP) is a birefringent slab with a suitably patterned transverse optical axis, with a topological singularity at its center developed in Naples by Marrucci et al. [L. Marrucci et al., Phys. Rev. Lett. 96, 163905 (2006); US patent US8264623B2, EU patent application EP2013647].

More specifically, the QP represents an optical device where for each point there is an optical axis in a different position. The specific pattern drawn on the q-plate defines the "charge" q of the singularity that characterizes the q-plate, and can be either an integer or an half integer. Assuming the normal incidence for the beam of light that crosses the QP, the angle $\alpha$ that defines the local optical axis respect to the singularity of the q-plate is $\alpha(r, \phi) = q\phi + \alpha_0$, where $q$ is the topological charge, and $\alpha_0$ a constant (and $\phi$ is the azimuthal angle). The working principle of the q-plate is based on the coupling between spin and orbital angular momenta. In a single-photon formalism, the QP implements the following transformations on the single photon state:

$$|L\rangle_\pi |m\rangle_o \xrightarrow{QP} |R\rangle_\pi |m + 2q\rangle_o, \quad (1)$$

$$|R\rangle_\pi |m\rangle_o \xrightarrow{QP} |L\rangle_\pi |m - 2q\rangle_o, \quad (2)$$

where $|\cdot\rangle_\pi$ and $|\cdot\rangle_o$ stand for the photon states in the polarization and OAM degrees of freedom respectively, while L and R denote the left and right circular polarization states and $m$ the corresponding OAM eigenvalue. Furthermore, any coherent superposition of the two input states given in Eqs. (1-2) are preserved [see E. Nagali et al., Phys. Rev. Lett. 103, 013601 (2009)]. Typical values for the efficiency of the q-plate device reach 85%.

## Measurement of a roll angle with the polarization degree of freedom.

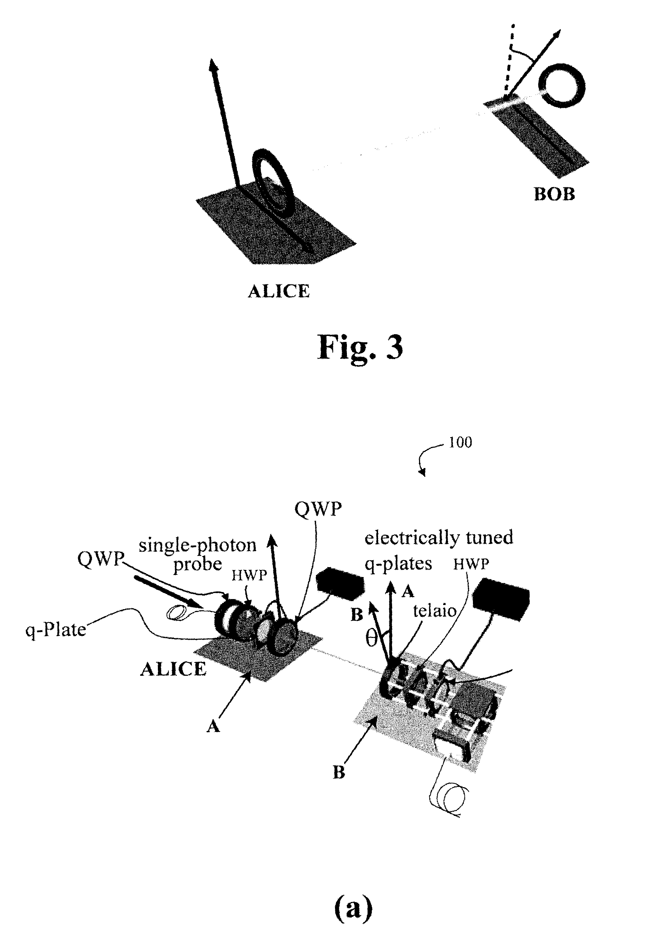

One of the most common problems in real-world optical measurements is to perform precise non-contact and/or remote optical measurements of roll angles. These are mechanical rotations of an object around one of its symmetry axes. Polarization based methods, essentially relying on Malus' law combined with suitable polarization manipulations, are among the most convenient approaches. With reference to fig. 3, let us consider a sender Alice and a receiver Bob who wish to measure a relative misalignment angle $\theta$ between their reference frames around the optical axis. This misalignment angle is a roll angle of Bob relative to Alice (or vice versa). Such a measurement task can be performed classically by exploiting the polarization degree of freedom of light (see Figure 3). The measurement can be performed by sending $N$ photons from Alice to Bob, each one in state $|\Psi^C\rangle \doteq |1\rangle_H \equiv \frac{1}{\sqrt{2}}(|1\rangle_R + |1\rangle_L)$, where $|n\rangle_x$ denotes a state of $n$ photons in mode $x$, with $x = H$, $R$, or $L$, representing the horizontal-linear, right- and left-circular polarization modes, respectively. Bob fixes a polarizer in the $H$-direction in his coordinate system, where the misalignment corresponds to a rotation by of $-\theta$ the photons' state. In turn, the $L$ and $R$ polarization states are eigenstates of rotation, so that in Bob's frame $|\Psi^C\rangle$ becomes $|\Psi^C(\theta)\rangle = \frac{1}{\sqrt{2}}(e^{i\theta}|1\rangle_R + e^{-i\theta}|1\rangle_L)$. The conditional probability that he detects a photon in the $H$-polarization (of his reference frame) given that the phase is $\theta$ is given by Malus' law: $p^C(H|\theta) = \cos^2\theta$. By measuring this probability (that translates directly in a light intensity, in the classical regime of many photons), Alice and Bob can estimate $\theta$. To strengthen their statistics, they repeat the procedure $\nu$ times, consuming a total of $\nu \times N$ photons, and average all the outcomes. Their final statistical error is bounded as

$$\Delta\theta^C \geq \left[2\sqrt{\nu N}\right]^{-1}. \quad (3)$$

There is therefore the need for a system and method which allows a measurement of the tilt (roll) angle $\theta$ with an increased precision, and correspondingly an increased angular resolution and sensitivity.

This need is met by the present invention, which is defined by the independent system claim 1 and method claim 9. Particular embodiments of the invention are defined by the dependent claims.

If the light source of the claimed system already produces a beam with linear polarization, then the means for producing the linear polarized state are not necessary, because we have an equivalent layout.

According to an advantageous aspect of the invention, said means for producing a linear polarized state for the light beam comprise a Quarter Wave Plate and a Half Wave Plate, or a polarization optics that is equivalent in its effect on the polarization of the light beam.

According to an advantageous aspect of the invention, said means for measuring the polarization of the light beam comprise a Polarizing Beam Splitter and a Photo-detector, or polarization optics that is equivalent in its effect on the polarization of the light beam and detectors that are equivalent in their effect of measurement of the light beam.

According to an advantageous aspect of the invention, after the q-plate in the first subsystem and before the q-plate in the second subsystem respective first and second Half Wave Plates are placed, to further increase the system angular sensitivity.

According to an advantageous aspect of the invention:

- the light source is a light source having periodically modulated polarization, for example a Zeeman laser;
- before said means for producing a linear polarized state for the light beam, a beam splitter is placed, which creates a reference beam and a measurement beam;
- the reference beam, after polarization detection, gives rise to a periodic signal that is used for frequency and/or phase stabilization of the light source and as reference for a phase detector of the measurement beam;
- the measurement beam is used by said first and second subsystems to obtain an enhanced phase variation, the periodic signal generated by the means (PBS, APD) for measuring the polarization of the light beam being submitted to the phase-detector which measures its oscillation phase relative to the reference; the oscillation phase being directly related to the angular rotation to be measured.

According to an advantageous aspect of the invention, the two-beams correlated state is a two-photon entangled state.

According to an advantageous aspect of the invention method, a plurality of measurements are performed, which are grouped into measurement sets $MS_1$, $MS_2$, ... $MS_K$, with K positive integer greater than 1, the set $MS_i$ containing an integer number $M_i$ of measurements, and characterized in that:

- $MS_1$ is a measurement set performed without using the first and second q-plates;
- $MS_K$ is a measurement set performed with a K-1-th value of the topological charge q of the q-plate, the K-1-th value of the topological charge q being greater than or equal to the K-2-th value of the topological charge q;

And in that the following steps are performed:

- on the basis of the $MS_1$ set, estimating a first value of $\theta$ or $\phi$ with a corresponding first error;
- discarding the measurement values outside said first error;
- on the basis of the $MS_K$ set, estimating a K-th value of $\theta$ $\phi$ with a corresponding K-th error;

taking the K-th value of $\theta$ $\phi$ as the value of $\theta$ or $\phi$ measured by the system of the invention.

According to an advantageous aspect of the invention, K is greater than 2.

The invention will be now described by way of illustration but not by way of limitation, with particular reference to the figures of the annexed drawings, wherein:

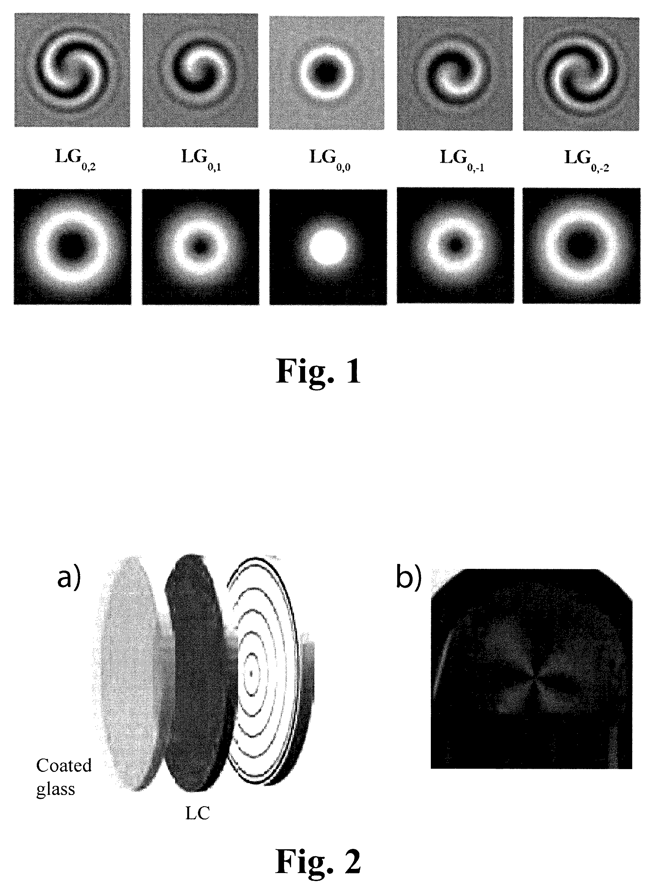

- Fig. 1 shows Laguerre-Gaussian modes. Examples of mode profile carrying orbital angular momentum [E. Nagali and F. Sciarrino, Advanced Photonic Sciences, (InTech, 2012)]. Top: phase profiles for different Laguerre-Gaussian modes, as described by the interference patterns with a spherical-wave reference. Bottom: corresponding intensity profile;
- Fig. 2 shows in (a) a q-plate device and in (b) a photography of the singularity in a real q-plate device. The picture has been taken by inserting the q-plate between two crossed polaroid films. [L. Marrucci et al., J. Opt. 13,064001 (2011)];
- Fig. 3 shows the polarization measurement of a roll angle. Two observers measure their relative angle by sending linearly polarized single-photons (or linearly polarized laser light), and by measuring the polarization state received by the receiver;

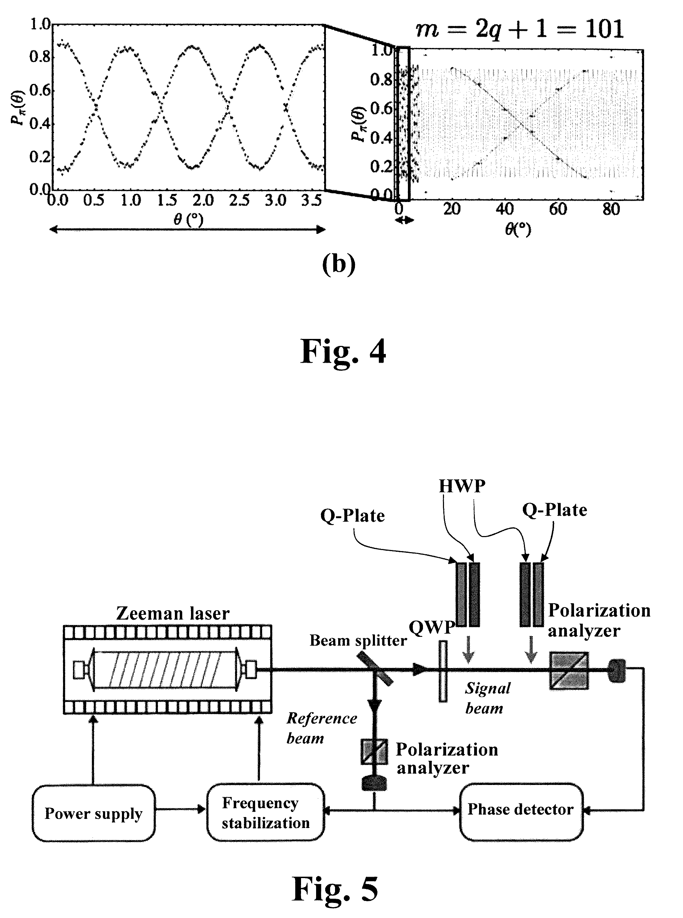

- Fig. 4 shows the concept of photonic tiltmeter (or goniometer) according to the invention, based on the photonic gear effect (see further below for a definition). Diagram (a) is the photonic tiltmeter setup for ultrasensitive measurements of a roll angle. Each single photon is converted in a quantum state carrying both spinorial (polarization) and orbital angular momentum, which results in an enhanced sensitivity in the measurement of $\theta$. The polarization fringes for orbital angular momentum of l=100 are reported in (b), corresponding to an enhancement in the sensitivity of a factor 101;
- Fig. 5 shows a representative scheme for the integration of the photonic gear effect in the measurement scheme proposed by Jiang et al. [H. Jiang and C. Yin, Opt. Eng. 39, 516 (2000)] to obtain an enhancement of the angle resolution by a large factor. A q-plate (QP) and a half-wave plate (HWP) are exploited to convert the measurement beam into a hybrid SAM-OAM state, more sensitive to physical rotations. The second HWP-QP pair is exploited to convert the state in a polarization-only one before been sent into the measurement apparatus; this is an example of how the photonic gear effect can be combined with any roll-angle measurement based on using a light beam and a polarization modulation;

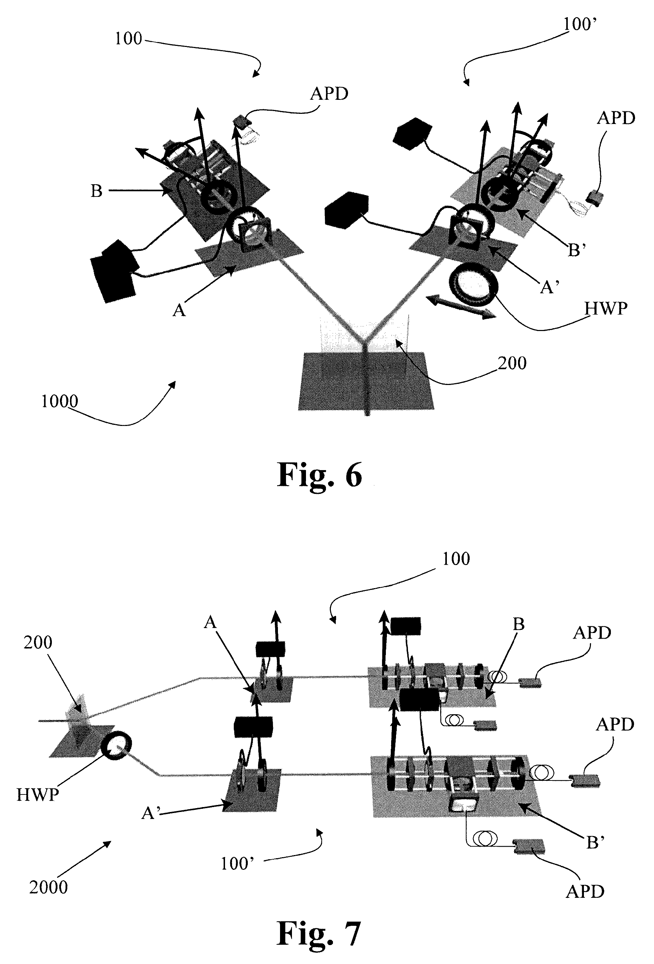

- Fig. 6 shows remote alignment of two distant parties. An entangled photon pair is sent by an independent third party to Alice and Bob. By performing local measurements to detect the polarization correlations between the two photon, Alice and Bob can measure their relative angle $\theta_A - \theta_B$;
- Fig. 7 shows entanglement-enhancement photonic gears according to the invention. Application of the photonic gear to polarization-entangled two photon states. Alice prepares an entangled state in two photons and performs its local photonic gear transformation for the hybrid SAM-OAM encoding. The two photons are then sent to Bob's stage undergoing the same rotation θ. Bob then performs local polarization-correlation measurements after decoding the received state to polarization-only with its set of wave plates and q-plates. The results of the measurement are exploited to measure the rotation angle between Alice's and Bob's stages;

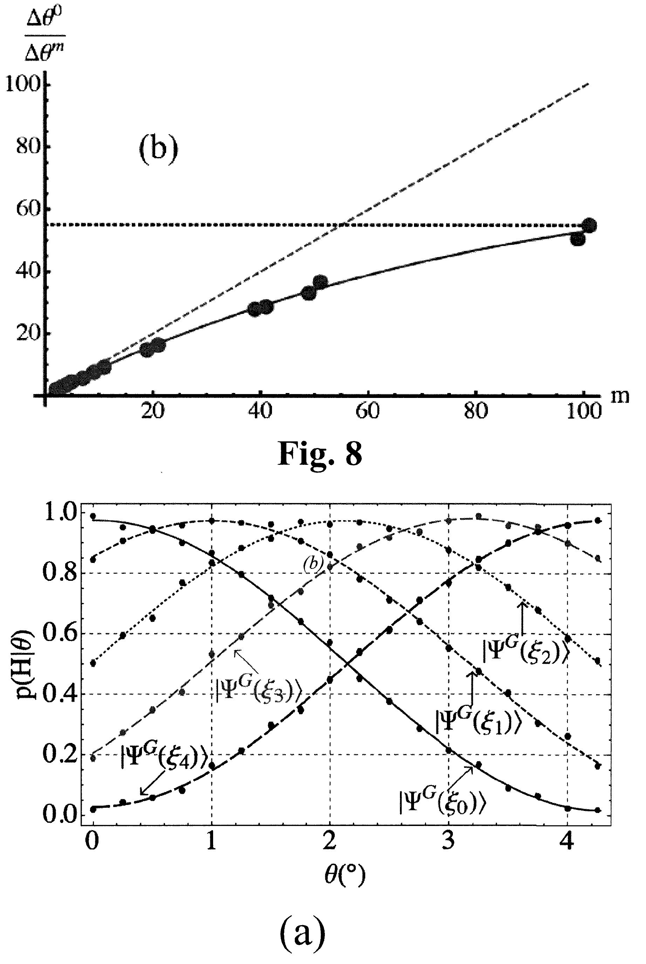

- Fig. 8 shows an estimation of a rotation angle with photonic gears in the single-photon regime. Ratio between the statistical errors $\Delta\theta_0/\Delta\theta_m$ for the polarization-only strategy versus the gears strategy of the invention in the single-photon regime;

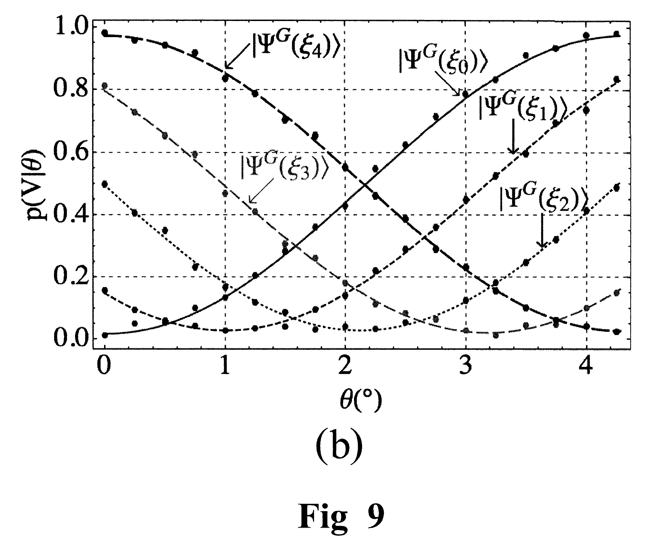

- Fig. 9 shows experimental oscillation patterns (a) and (b) for the single-photon photonic gear with and for different values of initial state phase.

**The concept of photonic polarization gear in the invention**

Making reference to Figures 4 and 5, according to an aspect of the invention, in the photonic gear 100, 100' approach of the invention, Alice and Bob exchange photons in SAM-OAM superposition states. Alice initially prepares N horizontally-polarized photons, as in the classical strategy. However, before sending them to Bob, she first let them pass through a q-plate of charge q. The q-plate implements the bidirectional (unitary) mode transformations

$$\{a^\dagger_{R,0} \leftrightarrow a^\dagger_{L,-2q}, a^\dagger_{L,0} \leftrightarrow a^\dagger_{R,2q}\},$$ where the subscripts 0 and $\pm 2q$ refer to the OAM values. The output state of the first q-plate is a hybrid SAM-OAM superposition state, more sensitive to physical rotation since both the spinorial (SAM) and the orbital (OAM) components of state receive a rotation-induced phase factor. The overall physical rotation introduces a relative phase between the two components which varies $m = 2q + 1$ times faster than the polarization-only case, so that the output photon polarization rotates $m$ times faster (photonic gear effect). The recorded polarization fringes now present a periodicity $\propto 1/m$, leading to an improved angular sensitivity $\Delta\theta/m$. In Figure 4 we show an example of experimental measurement for the polarization fringes with $m = 101$, showing that a strong enhancement in the periodicity can be achieved while preserving a high value for the fringe pattern visibility.

In the figure:

- HWP stands for half wave plate;
- QWP stands for quarter wave plate;
- PBS stands for polarizing beam splitter;
- APD stands for avalanche photo diode.

The rotational sensitivity enhancement due to the photonic gears effect can also be achieved in the classical regime with an intense laser, making it immediately applicable to real-world optical measurements. Depending on the details of the scheme, this typically leads to a sensitivity of about $10^{-2}$ degrees for a dynamical range of 30 - 360°, or about $10^{-4}$ degrees when restricting the range to 1. All these polarization-based methods [H. Jiang and C. Yin, Opt. Eng. 39, 516 (2000), Z. Liu, et al., Sensors Actuat. A 104, 127-131 (2003), S. Li, et al., Opt. Lett. 30, 242-244 (2005)], irrespective of the details, can be combined with the photonic gear tool according to the invention without changes (see Figure 5). Their sensitivity is therefore predicted to be improved approximately by the factor $m$ provided by the approach of the invention.

**Remote application**

The proposed photonic gear based on hybrid SAM-OAM state can be applied in a different scenario by exploiting entangled states. For example, making reference to figure 6, let us consider 2-photon polarization-entangled states (e.g. generated by system 200), where a third party sends one photon to Alice and the other to Bob. The overall system 1000 uses two identical systems 100, 100' as above described (system 100 has planes A and B for its subsystems, system 100' has planes A' and B' for its subsystems, as depicted).

Alice and Bob then make local polarization analysis in their own rotating stages. When $\theta_A \neq \theta_B$ this corresponds to the situation where two distant frames are aligned remotely with two-photon probes produced by an unrelated common source, which sends one photon to each frame, by exploiting the quantum correlations among the two photons. More specifically, the photons are generated in the maximally entangled polarization Bell state: $|\psi^-\rangle = \frac{1}{\sqrt{2}}(|1\rangle^A_{R,0}|1\rangle^B_{L,0} - |1\rangle^A_{L,0}|1\rangle^B_{R,0})$. The photons, before transmission, are passed through two q-plates with topological charges $q_A$ and $q_B$, respectively, and a HWP. Alice and Bob, in their rotated frames, apply the same transformations to the photons, thus converting them back to pure polarization states. Choosing $q_A = q_B$, the probability that Alice and Bob both detect *H*-polarized photon in their local frames is then:

$$p^{\psi^-}(HH|\theta_A\theta_B) = 1/2\sin^2[(2q+1)(\theta_A - \theta_B)] \qquad (4)$$

These correlations (in combination with classical communication channels) can be exploited to precisely estimate the relative misalignment $\theta_A - \theta_B$ and remotely align the two distant frames.

## Enhancement achievable with entangled states

The adoption of quantum resources can lead to increased sensitivity with respect to classical strategies. Using quantum resources, the optimal strategy consists of Alice sending $v$ probes, each one composed of $N$-photon entangled NOON state $|\psi^Q\rangle = \frac{1}{\sqrt{2}}(|N\rangle_R + |N\rangle_L)$. In Bob's frame after the rotation $\theta$, this state is expressed as $|\psi^Q(\theta)\rangle = \frac{1}{\sqrt{2}}(e^{\imath N\theta}|N\rangle_R + e^{-\imath N\theta}|N\rangle_L)$. The conditional probability that he detects the unrotated state $|\psi^Q\rangle$ is $p^Q(\psi^Q|\theta) = \cos^2(N\theta)$, which resolves values of $\theta$ $\sqrt{N}$ times smaller than $p^C(H|\theta)$. Their uncertainty is then bounded as: $\Delta\theta^Q \geq 1/(N\sqrt{\nu})$, also known as the Heisenberg limit. Our photonic gear can be also combined to such quantum-based approach leading to a hybrid classical-quantum one, which exploits both entanglement and high angular momenta through the photonic gear. In its simplest version, each probe may consist of an $N$-photon entangled NOON state $|\psi_G^Q\rangle = \frac{1}{\sqrt{2}}(|N\rangle_{R,-2q} + |N\rangle_{L,2q})$. Following the same steps as above, one finds that $p_G^Q(\psi_G^Q|\theta) = \cos^2(mN\theta)$, leading to a sensitivity $\Delta\theta_G^Q \geq 1/(mN\sqrt{\nu})$. This strategy leads to an enhancement of both the factor $m$ due to the photonic gears and the factor $\sqrt{N}$ due to quantum entanglement. However, the experimental preparation of NOON states with large $N$ is extremely challenging, and to date only $N = 3$, $N = 4$, and $N = 5$ photonic NOON states have been reported [M. W. Mitchell et al., Nature 429, 161 (2004); P. Walther et al., Nature 429, 158 (2004); T. Nagata et al., Science 316, 726 (2007); I. Afek et al., Science 316, 726 (2010)]. Moreover, as $N$ grows, $N$-photon entangled states become increasingly sensitive to losses, as the loss of a single photon is enough to destroy all the phase information. It has been proved that, in the presence of losses or other types of noise, no two-mode quantum state can beat the standard limit by more than just a constant factor in the limit of large N [J. Kolodinski et al., Phys. Rev. A 82, 053804 (2010); B. Escher et al., Nat. Phys. 7, 406 (2011); S. Knysh et al., Phys. Rev. A 83, 021804(R) (2011); R. Demkowicz-Dobrzanski et al., Nat. Commun. 3, 1063 (2012)]. Thus, ideally, this strategy features the Heisenberg precision scaling for hybrid SAM-OAM approaches, but it bears in practice the same loss-sensitivity problems as the polarization-only quantum strategy. However, for small $N$, these problems can still be efficiently dealt with as we describe below. Moreover, in the future such problems can be overcome, thus leading to a wider applicability of the invention.

Multi-photon quantum states other than NOON ones can indeed be combined with the photonic gears, leading to quantum enhanced performances. Let us assume that the photons are generated in the maximally entangled polarization Bell state $|\phi^-\rangle = \frac{1}{\sqrt{2}}(|1\rangle_{R,0}^A|1\rangle_{R,0}^B - |1\rangle_{L,0}^A|1\rangle_{L,0}^B)$. This state can be obtained from the anti-symmetric state $|\psi^-\rangle$ by inserting a half waveplate at the optical axis in the path of one of the two photons.

Making reference to figure 7, wherein the planes A, A' are parallel, B, B' are parallel as well and rotated by an angle $\theta$ respect to A and A' along the light's propagation direction. This scenario corresponds to the case where the two photons generated by Alice travel in a same mode and are subject to the same rotation $\theta$. After the conversion to an hybrid SAM-OAM state with our photonic gears, the rotation $\theta$, and the second transformation at Bob's stage, the probability of detecting two photons with H polarization when $q_A = q_B = q$ takes the form:

$$p_G^{\phi^-}(HH|\theta) = 1/2\sin^2[2(2q+1)\theta] \qquad (5)$$

Such system is the equivalent to a hybrid classical-quantum strategy for a $N=2$ NOON state and a photonic gear $m=2_q+1$. The full efficiency in the estimation of $\theta$ can be obtained by collecting and recording the four possible polarization correlations (*HH, HV, VH, VV*), which does not require extra measurement runs.

The technique of the invention is an important technological improvement for the high-precision measurement of rotation angles. The advantages of the present invention reside in the increase in sensibility to rotations proportional to m=2q+1. Three main characteristics can be identified:

a) compactness of the scheme, because it is constituted by few optical elements,
b) high robustness to losses and perturbations,
c) possibility to integrate the device in other optical schemes currently utilized,

such as in particular the system based on polarimetry in heterodyne detection.

The technique according to the invention presents a high robustness to the effects of the losses and perturbations. In particular, the technique does not exploit the N-particles coherence quantum properties that are intrinsically fragile with respect to noise. For this reason, the loss of optical signal due to the propagation and detection does not reflect into a complete cancelation of the quantum advantages but only in a reduction of a constant factor.

Moreover, these devices may be utilized to increase the precisions of methods currently utilized. In particular, all the schemes that exploit the degree of freedom of polarization can be improved by using the device of the invention.

## Calibrating the photonic gear of the invention

Here we describe the technical details of our phase estimation procedure for the measurement of an unknown angle.

Experimental imperfections lead to a non-unitary fringe visibility. Indeed, the loss of visibility increases the statistical error as:

$$\delta\theta_m \geq \left[2mV_m\sqrt{\eta_m}\sqrt{\nu N}\right]^{-1}, \qquad (6)$$

where $V_m$ is the visibility of the oscillation pattern and $\eta_m$ is the efficiency of the detection system. In Fig. 8 we show the results for the angle estimation in the single-photon regime for a gear value of $m$ up to $m=101$.

As q increases, the oscillation frequency of the output distribution grows, so that the interval, wherein the estimation is unambiguous, decreases with $q$. To circumvent this, it is possible to adopt an estimation strategy with adaptive concatenated steps. For simplicity, we describe the strategy in the single-photon regime, its extension to the coherent-pulse regime being trivially analogous. We split the measurements on all of $M = \nu N$ photons into 3 different steps. Each step $j$, for $1 \leq j \leq 3$, consumes $M_j$ photons prepared with $m = m_j$, in such a way that $m_3 > m_2 > m_1$ where $m_j = 2q_j + 1$. This guarantees that every consecutive step features a higher sensitivity. Each step $j$ renders an estimate $\theta_j$ and an uncertainty $\Delta\theta_j$. Each estimate $\theta_j$ is unambiguously defined only over an interval $\Omega_j$ of length $\mathcal{T}_j$ equal to half a period of oscillation of distributions for $q = q_j$: $\mathcal{T}_j = \frac{\pi}{2m_j}$. In addition, the photons in each $j$-th step are prepared in the state $|\Psi^G(\xi_j)\rangle = \frac{1}{\sqrt{2}}\left(e^{i\xi_j}|1\rangle_{R,-2q} + e^{-i\xi_j}|1\rangle_{L,2q}\right)$. The relative phase $\xi_j$ is such that the estimate $\overline{\theta}_{j-1}$ of the previous ($j$ - 1)-step sits exactly at one of the points of maximal sensitivity of $|\Psi^G(\xi_j)\rangle$. This condition is always possible to satisfy for $j>1$, where an estimate $\overline{\theta}_{j-1}$ is available. However, for the first step, unless one has some a-priori knowledge about $\theta^*$ (actual value of $\theta$), $\overline{\theta}_1$ is not defined a priori. In this case we simply choose $\xi_1 = 0$. The aim of adapting the phase at each step is two-fold. On the one hand, since this allows us to achieve the maximal angular resolution of each step, it speeds up the asymptotic saturation of the Quantum Cramér-Rao bound. On the other hand, as we discuss below, it breaks the symmetry in distributions between $m_j$ and $m_{j-1}$. This allows us to reduce the potential ambiguities in the estimate by a factor of two per step. For this reason, as we explain next, only three concatenated steps suffice for arbitrary $\theta^* \in \Omega$.

We next discuss the exact charge values $m_j = 2q_j \pm 1$ used in each step. It is not possible to increase the angular resolution arbitrarily much from step to step. In particular, one must require that $T_j \geq \Delta\theta_{j-1}$ for all. Also, we take $\mathcal{T}_j$ ($M_i$ is the number of measurements for step $i$) This choice is convenient in the asymptotic limit of large $M = M_1 + M_2 + M_3$, since it makes $M_1$ negligible with respect to $M_2$, and the latter in turn negligible with respect to $M_3$.

In order to implement the three-step protocol above described for the estimation of a completely unknown rotation angle, it is necessary to adapt the relative phase $\xi$ in the state $|\Psi^G(\xi)\rangle$ at each step of the process. This can be efficiently implemented by rotating the polarization of the input state of an angle $\xi$ by means of a half waveplate. Indeed, a rotation of the input state from $|1\rangle_H$ to $|1\rangle_V$ corresponds to an inversion in the maxima and the minima of the pattern. This is shown in Fig. 9, where we report the oscillation patterns obtained for several values of the phase $\xi$.

The preferred embodiments have been above described and some modifications of this invention have been suggested, but it should be understood that those skilled in the art can make variations and changes, without so departing from the related scope of protection, as defined by the following claims.

**Claims**

1. System (100, 100') for measuring the relative angular rotation θ of two planes A and B, comprising:

   - a light source producing a light beam,
   - first optical subsystem integral to plane A to prepare a suitable state for the light beam;
   - second optical subsystem integral to plane B to measure the state of the light beam exiting the first optical system;
   wherein θ is the angle around an axis parallel to the light beam,
   **characterized in that**:
   - the first optical subsystem comprises in sequence along the direction of the light beam:

     ∘ means (QWP, HWP) for producing a linearly polarized state for the light beam;
     ∘ a first q-plate (q-plate), which is a birefringent slab with a suitably patterned transverse optical axis and a topological singularity at its center having an associated topological charge q, and is arranged to transform a polarization state into a polarization/orbital angular momentum state;

   - the second optical subsystem comprises in further sequence along the direction of the light beam:

     ∘ a second q-plate (q-plate) with the same topological charge q as the first q-plate, the second q-plate being arranged to transform a polarization/orbital angular momentum state into a polarization state;
     ∘ means (PBS, APD) for measuring the polarization of the light beam.

2. System according to claim 1, **characterized in that** said means (QWP, HWP) for producing a linear polarized state for the light beam comprise a Quarter Wave Plate (QWP) and a Half Wave Plate (HWP), or a polarization optics that is equivalent in its effect on the polarization of the light beam.

3. System according to claim 1 or 2, **characterized in that** said means (PBS, APD) for measuring the polarization of the light beam comprise a Polarizing Beam Splitter (PBS) and a Photo-detector (APD), or polarization optics that is equivalent in its effect on the polarization of the light beam and detectors that are equivalent in their effect of measurement of the light beam.

4. System according to any claim 1 to 3, **characterized in that** after the q-plate in the first subsystem and before the q-plate in the second subsystem respective first and second Half Wave Plates (HWP) are placed, to further increase the system angular sensitivity.

5. System according to any claim 1 to 4, **characterized in that**

   - the light source is a light source having periodically modulated polarization, for example a Zeeman laser;
   - before said means (QWP, HWP) for producing a linear polarized state for the light beam, a beam splitter is placed, which creates a reference beam and a measurement beam;
   - the reference beam, after polarization detection, gives rise to a periodic signal that is used for frequency and/or phase stabilization of the light source and as reference for a phase detector of the measurement beam;
   - the measurement beam is used by said first and second subsystems to obtain an enhanced phase variation, the periodic signal generated by the means (PBS, APD) for measuring the polarization of the light beam being submitted to the phase-detector which measures its oscillation phase relative to the reference;
   the oscillation phase being directly related to the angular rotation to be measured.

6. System (1000) for measuring the relative angular rotation φ of two planes B and B' without direct optical link, **characterized in that** it comprises:

   ∘ a first system (100) as defined in any claim 1 to 4, with two planes A and B;
   ∘ a second system (100') as defined in any claim 1 to 4, with two planes A' and B' ;
   wherein the light source (200) is of the first system (100) is the same, common light source (200) as the light source of the second system (100') and is suitable to produce a correlated two-beams state, the first beam being sent to said first system and the second beam being sent to said second system, the system further comprising an electronics system for the measurement of the simultaneous detection of the two beams.

7. System according to claim 6, **characterized in that** the two-beams correlated state is a two-photon entangled state.

8. System (2000) for measuring the relative angular rotation θ of two planes A and B, **characterized in that** it comprises:

  ○ a first system (100) as defined in any claim 1 to 4, with two planes A and B;
  ○ a second system (100') as defined in any claim 1 to 4, with the planes A' and B' respectively parallel to A and B; wherein the light source (200) is of the first system (100) is the same, common light source (200) as the light source of the second system (100') and is suitable to produce an correlated two-beams state, just after the light source being placed a Half Wave Plate (HWP) on the path of only one of the two systems, to increase the sensitivity of the measurement, wherein the first beam is sent to said first system and the second beam is sent to said second system, the system further comprising an electronics system for the measurement of the simultaneous detection of the two beams.

9. Method for measuring the relative angular rotation θ of two planes A and B by using the system of any of claims 1 to 5, **characterized in that** the following steps are performed:

  - sending the light beam to said first subsystem;
  - sending the light beam exiting the first subsystem to the second subsystem;
  - measuring the polarization of the light in the second subsystem.

10. Method for measuring the relative angular rotation φ of two planes B and B' by using the system (1000) of any of claims 6 or 7 , **characterized in that** the following steps are performed:

  - preparing a correlated two-beams state of a light beam;
  - carrying out the method of claim 9 by using one beam of said two-beams state as the light beam sent to the first subsystem of the first system (100);
  - carrying out the method of claim 9 by using the other beam of said two-beams state as the light beam sent to the second subsystem of the second system (100'), and
  - comparing the polarizations measured in the second subsystems of the first and second system by counting the simultaneous detections of the two beams.

11. Method according to claim 10, **characterized in that** the two-beams correlated state is a two-photon entangled state.

12. Method for measuring the relative angular rotation θ of two planes A and B by using the system (2000) of any of claims 10 to 11 , **characterized in that** the following steps are performed:

  - preparing a correlated two-beams state of a light beam;
  - carrying out the method of claim 9 by using one beam of said two-beams state as the light beam sent to the first subsystem of the first system (100);
  - carrying out the method of claim 9 by using the other beam of said two-beams state as the light beam sent to the second subsystem of the second system (100'), and
  - comparing the polarizations measured in the second subsystems of the first and second system by counting the simultaneous detections of the two beams;
  wherein the planes A' and B' of the second system are respectively parallel to planes A and B of the first system, and just after the light source being placed a Half Wave Plate (HWP) on the path of only one of the two systems, to increase the sensitivity of the measurement.

13. Method according to any claim 9 to 12, wherein a plurality of measurements are performed, which are grouped into measurement sets $MS_1$, $MS_2$, ... $MS_K$, with K positive integer greater than 1, the set $MS_i$ containing an integer number $M_i$ of measurements, and **characterized in that**:

  - $MS_1$ is a measurement set performed without using the first and second q-plates;
  - $MS_K$ is a measurement set performed with a K-1-th value of the topological charge q of the q-plate, the K-1-th value of the topological charge q being greater than or equal to the K-2-th value of the topological charge q;

And **in that** the following steps are performed:

- on the basis of the $MS_1$ set, estimating a first value of $\theta$ or $\phi$ with a corresponding first error;
- discarding the measurement values outside said first error;
- on the basis of the $MS_K$ set, estimating a K-th value of $\theta$ or $\phi$ with a corresponding K-th error;
taking the K-th value of $\theta$ or $\phi$ as the value of $\theta$ or $\phi$ measured by the system of any claim 1-5, 7-8, 11.

**14.** Method according to claim 13, **characterized in that** K is greater than 2.

**Patentansprüche**

**1.** System (100, 100') zum Messen der relativen Winkelrotation $\theta$ von zwei Ebenen A und B, umfassend:

- eine Lichtquelle, die einen Lichtstrahl erzeugt,
- ein erstes optisches Subsystem integral zu Ebene A zum Erzeugen eines geeigneten Zustands für den Lichtstrahl;
- ein zweites optisches Subsystem integral zu Ebene B zum Messen des Zustands des das erste optische System verlassenden Lichtstrahls;
wobei $\theta$ der Winkel um eine Achse parallel zu dem Lichtstrahl ist,
**dadurch gekennzeichnet, dass**:
- das erste optische Subsystem in Folge in der Richtung des Lichtstrahls umfasst:

  ◦ Mittel (QWP, HWP) zum Erzeugen eines linear polarisierten Zustands für den Lichtstrahl;
  ◦ eine erste q-Platte (q-plate), die eine doppelbrechende Platte mit einer geeignet gemusterten transversalen optischen Achse und einer topologischen Singularität in ihrer Mitte mit einer assoziierten topologischen Ladung q ist, und zum Umwandeln eines Polarisationszustands in einen Polarisation/Orbital-Winkelmomentzustand angeordnet ist;

- das zweite optische Subsystem in weiterer Sequenz in der Richtung des Lichtstrahls umfasst:

  ◦ eine zweite q-Platte (q-plate) mit derselben topologischen Ladung q wie die erste q-Platte, wobei die zweite q-Platte angeordnet ist, um einen Polarisation/Orbital-Winkelmomentzustand in einen Polarisationszustand umzuwandeln;
  ◦ Mittel (PBS, APD) zum Messen der Polarisation des Lichtstrahls.

**2.** System gemäß Anspruch 1, **dadurch gekennzeichnet, dass** die Mittel (QWP, HWP) zum Erzeugen eines linear polarisierten Zustands für den Lichtstrahl eine Viertelwellenplatte (QWP) und eine Halbwellenplatte (HWP) oder eine Polarisationsoptik umfassen, die in ihrer Wirkung auf die Polarisation des Lichtstrahls äquivalent ist.

**3.** System gemäß Anspruch 1 oder 2, **dadurch gekennzeichnet, dass** die Mittel (PBS, APD) zum Messen der Polarisation des Lichtstrahls einen polarisierenden Strahlteiler (PBS) und einen Photodetektor (APD) oder eine Polarisationsoptik, die in ihrer Wirkung auf die Polarisation des Lichtstrahls äquivalent sind, und Detektoren umfassen, die in ihrer Wirkung des Messens des Lichtstrahls äquivalent sind.

**4.** System gemäß einem der Ansprüche 1 bis 3, **dadurch gekennzeichnet, dass** hinter der q-Platte im ersten Subsystem und vor der q-Platte im zweiten Subsystem jeweils eine erste und eine zweite Halbwellenplatte (HWP) platziert sind, um die Winkelempfindlichkeit des Systems weiter zu erhöhen.

**5.** System gemäß einem der Ansprüche 1 bis 4, **dadurch gekennzeichnet, dass**

- die Lichtquelle eine Lichtquelle mit periodisch modulierter Polarisation ist, zum Beispiel ein Zeeman-Laser;
- vor den Mitteln (QWP, HWP) zum Erzeugen eines linear polarisierten Zustands für den Lichtstrahl ein Strahlteiler platziert ist, der einen Referenzstrahl und einen Messstrahl erzeugt;
- der Referenzstrahl, nach der Polarisationsdetektion, ein periodisches Signal ergibt, das zur Frequenz- und/oder Phasenstabilisation der Lichtquelle und als Referenz für einen Phasendetektor des Messstrahls benutzt wird;
- der Messstrahl von dem ersten und zweiten Subsystem zum Erhalten einer verstärkten Phasenvariation benutzt wird, wobei das von den Mitteln (PBS, APD) zum Messen der Polarisation des Lichtstrahls erzeugte periodische Signal dem Phasendetektor zugeführt wird, der seine Oszillationsphase relativ zur Referenz misst; wobei die Oszillationsphase direkt auf die zu messende Winkelrotation bezogen ist.

6. System (1000) zum Messen der relativen Winkelrotation ϕ von zwei Ebenen B und B' ohne direkte optische Verbindung, **dadurch gekennzeichnet, dass** es umfasst:

  ○ ein erstes System (100), wie es in einem der Ansprüche 1 bis 4 definiert ist, mit zwei Ebenen A und B;
  ○ ein zweites System (100'), wie es in einem der Ansprüche 1 bis 4 definiert ist, mit zwei Ebenen A' und B';
  wobei die Lichtquelle (200) des ersten Systems (100) dieselbe gemeinsame Lichtquelle (200) ist wie die Lichtquelle des zweiten Systems (100') und zum Erzeugen eines korrelierten Zwei-Strahlen-Zustands geeignet ist, wobei der erste Strahl zu dem ersten System gesendet wird und der zweite Strahl zu dem zweiten System gesendet wird, wobei das System ferner ein Elektroniksystem zum Messen der gleichzeitigen Detektion der beiden Strahlen umfasst.

7. System gemäß Anspruch 6, **dadurch gekennzeichnet, dass** der korrelierte Zwei-Strahlen-Zustand ein verschwänkter Zwei-Photonen-Zustand ist.

8. System (2000) zum Messen der relativen Winkelrotation θ von zwei Ebenen A und B, **dadurch gekennzeichnet, dass** es umfasst:

  ○ ein erstes System (100), wie es in einem der Ansprüche 1 bis 4 definiert ist, mit zwei Ebenen A und B;
  ○ ein zweites System (100') wie es in einem der Ansprüche 1 bis 4 definiert ist, wobei die Ebenen A' und B' jeweils parallel zu A und B sind;
  wobei die Lichtquelle (200) des ersten Systems (100) dieselbe gemeinsame Lichtquelle (200) ist wie die Lichtquelle des zweiten Systems (100') und zum Erzeugen eines korrelierten Zwei-Strahlen-Zustands geeignet ist, wobei unmittelbar hinter der Lichtquelle eine Halbwellenplatte (HWP) auf dem Pfad von nur einem der zwei Systeme platziert ist, um die Empfindlichkeit der Messung zu erhöhen, wobei der erste Strahl zu dem ersten System gesendet wird und der zweite Strahl zu dem zweiten System gesendet wird, wobei das System ferner ein Elektroniksystem zum Messen der gleichzeitigen Detektion der beiden Strahlen umfasst.

9. Verfahren zum Messen der relativen Winkelrotation θ von zwei Ebenen A und B mit Hilfe des Systems gemäß einem der Ansprüche 1 bis 5, **dadurch gekennzeichnet, dass** die folgenden Schritte ausgeführt werden:

  - Senden des Lichtstrahls zu dem ersten Subsystem;
  - Senden des das erste Subsystem verlassenden Lichtstrahls zum zweiten Subsystem;
  - Messen der Polarisation des Lichts in dem zweiten Subsystem.

10. Verfahren zum Messen der relativen Winkelrotation ϕ von zwei Ebenen B und B' unter Verwendung des Systems (1000) gemäß Anspruch 6 oder 7, **dadurch gekennzeichnet, dass** die folgenden Schritte ausgeführt werden:

  - Erzeugen eines korrelierten Zwei-Strahlen-Zustands eines Lichtstrahls;
  - Ausführen des Verfahrens gemäß Anspruch 9 unter Verwendung eines Strahls des Zwei-Strahlen-Zustands als den zum ersten Subsystem des ersten Systems (100) gesendeten Lichtstrahl;
  - Ausführen des Verfahrens gemäß Anspruch 9 unter Verwendung des anderen Strahls des Zwei-Strahlen-Zustands als den zum zweiten Subsystem des zweiten Systems (100') gesendeten Lichtstrahl, und
  - Vergleichen der in den zweiten Subsystemen des ersten und zweiten Systems gemessenen Polarisationen durch Zählen der gleichzeitigen Detektionen der beiden Strahlen.

11. Verfahren gemäß Anspruch 10, **dadurch gekennzeichnet, dass** der korrelierte Zwei-Strahlen-Zustand ein verschränkter Zwei-Photonen-Zustand ist.

12. Verfahren zum Messen der relativen Winkelrotation θ von zwei Ebenen A und B unter Verwendung des Systems (2000) gemäß einem der Ansprüche 10 bis 11, **dadurch gekennzeichnet, dass** die folgenden Schritte ausgeführt werden;

  - Präparieren eines korrelierten Zwei-Strahlen-Zustands eines Lichtstrahls;
  - Ausführen des Verfahrens gemäß Anspruch 9 unter Verwendung von einem Strahl des Zwei-Strahlen-Zustands als den zum ersten Subsystem des ersten Systems (100) gesendeten Lichtstrahl;

- Ausführen des Verfahrens gemäß Anspruch 9 unter Verwendung des anderen Strahls des Zwei-Strahlen-Zustands als den zum zweiten Subsystem des zweiten Systems (100') gesendeten Lichtstrahl, und
- Vergleichen der in den zweiten Subsystemen des ersten und zweiten Systems gemessenen Polarisationen durch Zählen der gleichzeitigen Detektionen der beiden Strahlen;
wobei die Ebenen A' und B' des zweiten Systems jeweils parallel zu den Ebenen A und B des ersten Systems sind, und wobei unmittelbar hinter der Lichtquelle eine Halbwellenplatte (HWP) auf dem Pfad von nur einem der beiden Systeme platziert ist, um die Empfindlichkeit der Messung zu erhöhen.

**13.** Verfahren gemäß einem der Ansprüche 9 bis 12, wobei eine Vielzahl von Messungen durchgeführt werden, die zu Messsätzen $MS_1$, $MS_2$, ... $MS_K$ gruppiert werden, wobei K eine positive ganze Zahl größer als 1 ist, wobei der Satz $MS_i$ eine ganze Zahl $M_i$ von Messungen enthält, und **dadurch gekennzeichnet, dass**:

- $MS_1$ ein Messsatz ist, der ohne Verwendung der ersten und zweiten q-Platten durchgeführt wird;
- $MS_K$ ein Messsatz ist, der mit einem K-1-ten Wert der topologischen Ladung q der q-Platte durchgeführt wird, wobei der K-1-te Wert der topologischen Ladung q gleich oder größer ist als der K-2-te Wert der topologischen Ladung q;
und dadurch, dass die folgenden Schritte ausgeführt werden:
- Schätzen, auf der Basis des $MS_1$ Satzes, eines ersten Wertes von $\theta$ oder $\phi$ mit einem entsprechenden ersten Fehler;
- Verwerfen der Messwerte außerhalb des ersten Fehlers;
- Schätzen, auf der Basis des $MS_K$ Satzes, eines K-ten Wertes von $\theta$ oder $\phi$ mit einem entsprechenden K-ten Fehler;
Nehmen des K-ten Wertes von $\theta$ oder $\phi$ als den Wert von $\theta$ oder $\phi$, der mit dem System gemäß einem der Ansprüche 1-5, 7-8, 11 gemessen wurde.

**14.** Verfahren gemäß Anspruch 13, **dadurch gekennzeichnet, dass** K größer als 2 ist.


**Revendications**

**1.** Système (100, 100') pour mesurer la rotation angulaire relative $\theta$ de deux plans A et B, comprenant :

- une source de lumière produisant un faisceau lumineux,
- un premier sous-système optique solidaire du plan A pour préparer un état approprié pour le faisceau lumineux ;
- un deuxième sous-système optique solidaire du plan B pour mesurer l'état du faisceau lumineux sortant du premier système optique ; où $\theta$ est l'angle autour d'un axe parallèle au faisceau lumineux,
**caractérisé en ce que** :
- le premier sous-système optique comprend, en séquence le long de la direction du faisceau lumineux :

. des moyens (QWP, HWP) de production d'un état de polarisation linéaire pour le faisceau lumineux ;
. une première lame q (lame q), qui est une plaque de biréfringence ayant un axe optique transversal structuré de manière appropriée et une singularité topologique en son centre, ayant une charge topologique q associée, et qui est conçue pour transformer un état de polarisation en un état de polarisation / moment angulaire orbital ;

- le deuxième sous-système optique comprend, au-delà, en séquence le long de la direction du faisceau lumineux :

. une deuxième lame q (lame q), ayant la même charge topologique q que la première lame q, la deuxième lame q étant conçue pour transformer un état de polarisation / moment angulaire orbital en un état de polarisation ;
. des moyens (PBS, APD) de mesure de la polarisation du faisceau lumineux.

**2.** Système selon la revendication 1, **caractérisé en ce que** lesdits moyens (QWP, HWP) de production d'un état de polarisation linéaire pour le faisceau lumineux comprennent une Plaque Quart d'Onde (QWP) et une Plaque Demi-Onde (HWP), ou une optique de polarisation qui a un effet équivalent sur la polarisation du faisceau lumineux.

**3.** Système selon la revendication 1 ou 2, **caractérisé en ce que** lesdits moyens (PBS, APD) de mesure de la polarisation du faisceau lumineux comprennent un Séparateur de Faisceau par Polarisation (PBS) et un Photo-Détecteur (APD), ou une optique de polarisation qui a un effet équivalent sur la polarisation du faisceau lumineux et des détecteurs qui ont un effet équivalent de mesure du faisceau lumineux.

4. Système selon l'une quelconque des revendications 1 à 3, **caractérisé en ce que** des première et deuxième Lames Quart d'Onde (HWP) sont placées respectivement après la lame q du premier sous-système et avant la lame q du deuxième sous-système, pour augmenter davantage la sensibilité angulaire du système.

5. Système selon l'une quelconque des revendications 1 à 4, **caractérisé en ce que** :

- la source de lumière est une source de lumière ayant une polarisation à modulation périodique, par exemple un laser Zeeman ;
- un séparateur de faisceau est placé avant lesdits moyens (QWP, HWP) de production d'un état de polarisation linéaire pour le faisceau lumineux, créant un faisceau de référence et un faisceau de mesure ;
- le faisceau de référence, après détection de la polarisation, donne naissance à un signal périodique qui est utilisé pour une stabilisation de fréquence et/ou de phase de la source de lumière et en tant que référence pour un détecteur de phase du faisceau de mesure ;
- le faisceau de mesure est utilisé par les premier et deuxième sous-systèmes pour obtenir une variation de phase améliorée, le signal périodique généré par les moyens (PBS, APD) de mesure de la polarisation du faisceau lumineux étant soumis au détecteur de phase qui mesure sa phase d'oscillation par rapport à la référence ;
la phase d'oscillation étant en relation directe avec la rotation angulaire à mesurer.

6. Système (1000) pour mesurer la rotation angulaire relative $\phi$ de deux plans B et B' sans lien optique direct, **caractérisé en ce qu'**il comprend :

- un premier système (100) tel que défini dans l'une quelconque des revendications 1 à 4, avec deux plans A et B ;
- un deuxième système (100') tel que défini dans l'une quelconque des revendications 1 à 4, avec deux plans A' et B' ;
où la source de lumière (200) du premier système (100) est la même source de lumière, commune, (200) que la source de lumière du deuxième système (100') et est appropriée pour produire un état à deux faisceaux, corrélé, le premier faisceau étant envoyé audit premier système et le deuxième faisceau étant envoyé audit deuxième système, le système comprenant en outre un système électronique pour la mesure de la détection simultanée des deux faisceaux.

7. Système selon la revendication 6, **caractérisé en ce que** l'état corrélé à deux faisceaux est un état enchevêtré à deux photons.

8. Système (2000) pour mesurer la rotation angulaire relative $\theta$ de deux plans A et B, **caractérisé en ce qu'**il comprend :

- un premier système (100) tel que défini dans l'une quelconque des revendications 1 à 4, avec deux plans A et B ;
- un deuxième système (100') tel que défini dans l'une quelconque des revendications 1 à 4, avec les plans A' et B' respectivement parallèles à A et B ;
où la source de lumière (200) du premier système (100) est la même source de lumière, commune, (200) que la source de lumière du deuxième système (100') et est appropriée pour produire un état à deux faisceaux, corrélé, une Lame Demi-Onde (HWP) étant placée juste après la source de lumière sur le trajet d'un seul des deux systèmes, pour augmenter la sensibilité de la mesure, le premier faisceau étant envoyé audit premier système et le deuxième faisceau étant envoyé audit deuxième système, le système comprenant en outre un système électronique pour la mesure de la détection simultanée des deux faisceaux.

9. Procédé de mesure de la rotation angulaire relative $\theta$ de deux plans A et B à l'aide du système selon l'une quelconque des revendications 1 à 5, **caractérisé en ce que** les étapes suivantes sont mises en oeuvre :

- envoi du faisceau lumineux audit premier sous-système ;
- envoi du faisceau lumineux sortant du premier sous-système au deuxième sous-système ;
- mesure de la polarisation de la lumière dans le deuxième sous-système.

10. Procédé de mesure de la rotation angulaire relative $\phi$ de deux plans B et B' à l'aide du système (1000) selon l'une quelconque des revendications 6 ou 7, **caractérisé en ce que** les étapes suivantes sont mises en oeuvre :

- préparation d'un état à deux faisceaux, corrélé, d'un faisceau lumineux ;
- exécution du procédé de la revendication 9 en utilisant l'un des faisceaux dudit état à deux faisceaux en tant que faisceau lumineux envoyé au premier sous-système du premier système (100) ;
- exécution du procédé de la revendication 9 en utilisant l'autre faisceau dudit état à deux faisceaux en tant que faisceau lumineux envoyé au deuxième sous-système du deuxième système (100') ; et
- comparaison des polarisations mesurées dans les deuxième sous-systèmes des premier et deuxième systèmes par comptage des détections simultanées des deux faisceaux.

**11.** Procédé selon la revendication 10, **caractérisé en ce que** l'état corrélé à deux faisceaux est un état enchevêtré à deux photons.

**12.** Procédé de mesure de la rotation angulaire relative $\theta$ de deux plans A et B à l'aide du système (2000) selon l'une quelconque des revendications 10 à 11, **caractérisé en ce que** les étapes suivantes sont mises en oeuvre :

- préparation d'un état à deux faisceaux, corrélé, d'un faisceau lumineux ;
- exécution du procédé de la revendication 9 en utilisant l'un des faisceaux dudit état à deux faisceaux en tant que faisceau lumineux envoyé au premier sous-système du premier système (100) ;
- exécution du procédé de la revendication 9 en utilisant l'autre faisceau dudit état à deux faisceaux en tant que faisceau lumineux envoyé au deuxième sous-système du deuxième système (100') ; et
- comparaison des polarisations mesurées dans les deuxième sous-systèmes des premier et deuxième systèmes par comptage des détections simultanées des deux faisceaux ;
où les plans A' et B' du deuxième système sont respectivement parallèles aux plans A et B du premier système, et une Lame Demi-Onde (HWP) est placée juste après la source de lumière sur le trajet d'un seul des deux systèmes, pour augmenter la sensibilité de la mesure.

**13.** Procédé selon l'une quelconque des revendications 9 à 12, dans lequel une pluralité de mesures sont effectuées, qui sont regroupées en ensembles de mesures $MS_1$, $MS_2$, ... $MS_k$, où K est un entier positif supérieur à 1, l'ensemble $MS_i$ contenant un nombre entier $M_i$ de mesures, et **caractérisé en ce que** :

- $MS_1$ est un ensemble de mesures exécuté sans utilisation des première et deuxième lames q ;
- $MS_k$ est un ensemble de mesures exécuté avec une K-1$^{ème}$ valeur de la charge topologique q de la lame q, la K-1$^{ème}$ valeur de la charge topologique q étant supérieure ou égale à la K-2$^{ème}$ valeur de la charge topologique q ;
et **en ce que** les étapes suivantes sont mises en oeuvre :
- à partir de l'ensemble $MS_1$, estimation d'une première valeur de $\theta$ ou $\phi$ avec une première erreur correspondante ;
- suppression des valeurs de mesure externes à ladite première erreur ;
- en fonction de l'ensemble $MS_K$, estimation de la K$^{ème}$ valeur de $\theta$ ou $\phi$ avec une K$^{ème}$ erreur correspondante ;
en prenant la K$^{ème}$ valeur de $\theta$ ou $\phi$ en tant que valeur de $\theta$ ou $\phi$ mesurée par le système selon l'une quelconque des revendications 1-5, 7-8, 11.

**14.** Procédé selon la revendication 13, **caractérisé en ce que** K est supérieur à 2.

$LG_{0,2}$ $LG_{0,1}$ $LG_{0,0}$ $LG_{0,-1}$ $LG_{0,-2}$

# Fig. 1

a)

Coated
glass

LC

b)

# Fig. 2

**ALICE**

# Fig. 3

**(a)**

$$m = 2q + 1 = 101$$

**(b)**

# Fig. 4

**Fig. 5**

**Fig. 6**

**Fig. 7**

**Fig. 8**

(a)

(b)

Fig 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8264623 B2
- EP 2013647 A

**Non-patent literature cited in the description**

- **V. GIOVANNETTI et al.** *Nature Photon.,* 2011, vol. 5, 222
- **M. W. MITCHELL et al.** *Nature,* 2004, vol. 429, 161
- **P. WALTHER et al.** *Nature,* 2004, vol. 429, 158
- **T. NAGATA et al.** *Science,* 2007, vol. 316, 726
- **I. AFEK et al.** *Science,* 2010, vol. 316, 726
- **N. SPAGNOLO et al.** *Phys. Rev. Lett.,* 2012, vol. 108, 233602
- **D. LEIBFRIED et al.** *Nature,* 2005, vol. 438, 639
- **C. ROOS et al.** *Nature,* 2006, vol. 443, 316
- **J. A. JONES et al.** *Science,* 2009, vol. 24, 1166
- **H. JIANG ; C. YIN.** *Opt. Eng.,* 2000, vol. 39, 516
- **Z. LIU et al.** *Sensors Actuat. A,* 2003, vol. 104, 127-131
- **S. LI et al.** *Opt. Lett.,* 2005, vol. 30, 242-244
- **ALLEN et al.** *Phys. Rev. A.,* 1992, vol. 45, 8185
- **MAIR et al.** *Nature,* 2001, vol. 412, 313
- **MOLINA-TERRIZA et al.** *J. Europ. Opt. Soc. Rap. Public.,* 2007, vol. 2, 07014
- **TORNER et al.** *Optics Express,* 2005, vol. 13, 873
- **TAMBURINI et al.** *Phys. Rev. Lett.,* 2006, vol. 97, 163903
- **HARKE et al.** *Microscopy,* 2006, vol. 3, 793-796
- **HELL.** Single Molecule Spectroscopy in Chemistry. *Physics and Biology,* 2009, 365-398
- **SHOHAM et al.** *Nature Methods,* 2005, vol. 2, 837
- **ANDERSEN et al.** *Phys. Rev. Lett.,* 2006, vol. 97, 170406
- **CERF et al.** *Phys. Rev. Lett.,* 2002, vol. 88, 127902
- **LANYON et al.** *Nature Physics,* 2009, vol. 7, 134
- **FRANKE-ARNOLD et al.** *Laser and Photonics Reviews,* 2008, vol. 2, 299
- **MOLINA-TERRIZA et al.** *Nature Physics,* 2007, vol. 3, 305
- **BEIJERSBERGEN et al.** *Opt. Commun.,* 1994, vol. 112, 321
- **N. YOSHIDA et al.** *Proc. SPIE,* 1996, vol. 2885, 132
- **L. MARRUCCI et al.** *Phys. Rev. Lett.,* 2006, vol. 96, 163905
- **BEIJERSBERGEN et al.** *Opt. Commun.,* 1993, vol. 96, 123-132
- **R. A. BETH.** *Phys. Rev.,* 1936, vol. 50, 115
- **E. NAGALI et al.** *Phys. Rev. Lett.,* 2009, vol. 103, 013601
- **E. NAGALI ; F. SCIARRINO.** *Advanced Photonic Sciences,* 2012
- **L. MARRUCCI et al.** *J. Opt.,* 2011, vol. 13, 064001
- **J. KOLODINSKI et al.** *Phys. Rev. A,* 2010, vol. 82, 053804
- **B. ESCHER et al.** *Nat. Phys.,* 2011, vol. 7, 406
- **S. KNYSH et al.** *Phys. Rev. A,* 2011, vol. 83, 021804
- **R. DEMKOWICZ-DOBRZANSKI et al.** *Nat. Commun.,* 2012, vol. 3, 1063